# EUROPEAN PATENT APPLICATION

(11) **EP 4 525 258 A1**
(43) Date of publication of application: **19.03.2025**
(21) Application number: 23197143.3
(22) Date of filing: 13.09.2023
(51) Int. Cl.: H02J 7/00, H02J 7/36

(54) **COORDINATED TRIGGERING OF MODULE-LEVEL PROTECTION AND BYPASS IN ENERGY STORAGE SYSTEMS**

(71) Applicant: Hitachi Energy Ltd, 8050 Zürich (CH)
(72) Inventor: Viatkin, Aleksandr, 72338 Västerås (SE); Bai, Haofeng, 723 48 Västerås (SE); Chou, Shih-Feng, 72342 Västerås (SE)
(74) Representative: AWA Sweden AB

(57) **Abstract**

The present disclosure relates to a method of controlling operation of an energy storage system, ESS, wherein said ESS comprises: a converter (10) providing a DC converter voltage (V_{dc}) between a first and a second converter connection terminal (10A, 10B); a plurality of strings (S1, S2, Sx), each string (S1, S2, Sx) comprising a plurality of string segments (S11, S12, S1n; S21, S22, S2n; Sx1, Sx2, Sxn) connected in series, each string segment comprising at least one energy storage module (EM), each string (S1, S2, Sx) associated with a respective open circuit DC voltage (V_{S1}, V_{S2}, V_{Sx}) dependent on energy stored in the energy storage modules in each respective string (S1, S2, Sx), the strings (S1, S2, Sx) connected in parallel between the first and second converter connection terminals (10A, 10B), the method comprising: when at least one energy storage module (EM) in a first string (S1) is subject to a predetermined event, such as a fault or maintenance, operating (101) a module level protection circuit associated with said at least one energy storage module (EM) such that one of the following occurs: i) bypassing (101a) said at least one energy storage module (EM), ii) disconnecting (101b) said at least one energy storage module (EM). An ESS and a control device are also disclosed.

## Description

### Technical Field

The invention relates to a method of controlling operation of an energy storage system, ESS, and in particular a method of controlling operation of an ESS upon fault detection. The invention also relates to a control device for carrying out said method and an ESS incorporating said control device.

### Background

An energy storage system, ESS, comprises energy storage devices (e.g., batteries) for storing energy to be released when needed at a later time. The energy storage devices are typically arranged in configurations of series- and/or parallel connected circuits. An ESS may also incorporate fail-safe solutions for handling a fault in the ESS to mitigate performance loss and/or prevent damage of an affected component. Depending on application, fail-safe solutions may involve protecting and/or bypassing the affected component.

US2013049472 AA discloses an ESS configuration including a battery stack that consists of a plurality of series-connected battery units, thereby forming a plurality of branches of battery units. Each battery unit of each battery unit branch is composed of a plurality of parallel-connected battery cells. Moreover, each battery unit comprises a bypassing switch for each battery cell, thereby allowing each battery cell to be bypassed when affected by a fault. Each battery unit also comprises individual protection devices for each battery cell.

A main drawback of this ESS configuration is that some faults require a complete interruption of a battery unit branch before closing a bypass circuit. This typically results in the ESS being oversized to keep up with any eventual power/energy losses due to a short-term battery unit branch disconnection. A further drawback is that some faults require an intentional short-circuiting of a battery unit before individual protective devices can be controlled to disconnect parallel-connected battery cells from the circuit. This typically results in the battery being designed to allow short-term short-circuiting. These drawbacks thus result in both the battery units and the bypassing/protective circuits becoming subjected to significant stresses following overcurrent and/or overvoltage.

Bypassing/protective circuits of current ESS solutions may therefore be preferably designed to e.g., withstand initial peaks of short-circuit currents, and to withstand significant circulating currents due to mismatching between open circuit voltages of parallel branches/devices. Moreover, the ESS protection circuit design may therefore be preferably designed to be capable of dealing with highly hazardous inter-branch or system level faults that are typically accompanied by an enormous release of energy causing fires, explosions etc. Therefore, it is extremely important to localize and isolate a fault as fast as possible to stop propagation to adjacent energy storage devices.

In view of the above, it is of interest to provide a solution which alleviates at least some of the problems of current ESS solutions.

### Summary

It is an object of the present invention to provide an improved solution that alleviates the mentioned drawbacks with present solutions. A first object of the invention is to provide a method of controlling an energy storage system ESS. A second object of the invention is to promote continued operation of the ESS when one or more energy storage modules needs to be bypassed or disconnected due to a predetermined event such as a fault or maintenance. A third object of the invention is to mitigate an undesired circulation current between strings when one or more energy storage modules needs to be bypassed. A fourth object of the invention is to provide a control device for performing said method. A fifth object of the invention is to provide an ESS comprising said control device. A sixth object of the invention is to provide a scalable protection circuit for any voltage level of the ESS. These objects are solved by one or more of the inventions defined in the claims. Additional advantageous embodiments are described in the following.

According to a first aspect, a method of controlling operation of an energy storage system, ESS, is provided.

The ESS comprises a converter providing a DC converter voltage between a first converter connection terminal and a second converter connection terminal. The ESS comprises a plurality of strings, each string comprising a plurality of string segments connected in series, each string segment comprising at least one energy storage module, each string associated with a respective open circuit DC voltage dependent on energy stored in the energy storage modules in each respective string, the strings connected in parallel between the first and second converter connection terminals.

The method comprises, when at least one energy storage module in a first string is subject to a predetermined event, such as a fault or a maintenance, operating a module level protection circuit associated with said at least one energy storage module such that one of the following occurs: i) bypassing said at least one energy storage module, ii) disconnecting said at least one energy storage module.

By controlling operation of an ESS at a module level, one or more energy storage modules subject to said predetermined event may be bypassed or disconnected, allowing the ESS to continue operation at a reduced performance. Hence, the invention promotes continued operation of the ESS while said one or more energy storage modules are bypassed or disconnected. The method may further comprise a step of determining, based on the predetermined event, whether to bypass the at least one energy storage module or to disconnect the at least one energy storage module. Hence, the predetermined event may include one category of events for which it is preferred to bypass the at least one energy storage module and one other category of events for which it is preferred to disconnect the at least one energy storage module.

Said ESS may comprise a plurality of energy storage system strings. A first plurality of energy storage system strings may comprise a plurality of energy storage segments connected in series. Each energy storage segment comprises at least one energy storage module. One or more energy storage segments in the first plurality of energy storage system strings may comprise two or more energy storage modules, which may be connected in series, or connected in parallel. Energy storage modules in one or more energy storage segments may be arranged in a mix configuration comprising parallel connected energy storage modules and series connected energy storage modules. Said ESS may comprise a second plurality having a partially similar and/or different arrangement of energy storage segments.

A plurality of energy storage modules may be subject to one or more predetermined events. The plurality of energy storage modules may be located in the same string or in different strings. The method may comprise coordinating bypassing and optionally disconnecting said plurality of energy storage modules. This may reduce a time period during which the ESS experiences circulating currents between parallel strings.

When disconnecting at least one energy storage module by means of a module level protection circuit, it may disconnect all energy storage modules in a string segment. Thereby, the string segment may be disconnected as a result of disconnecting said at least one energy storage module. When the string segments are connected in series, disconnecting the string segment may result in disconnecting the string. The method may comprise disconnecting two or more string segments in a string in this manner via operation of module level protection circuits associated with the at least one energy storage module.

By open circuit DC voltage, it may be meant a DC voltage between a first connection terminal of a string and a second connection terminal of said string. The open circuit DC voltage may be dependent on energy stored in each energy storage segment.

According to one embodiment, the method further comprises:
operating respective module level protection circuit associated with one or more energy storage modules of at least two strings connected between the first and second converter connection terminals to disconnect said at least two strings of the ESS from one another and the first and second connection terminals. By this, a plurality of strings of the ESS may be disconnected. The method may involve disconnecting a first plurality of strings in this manner, which first plurality may include two or more or all strings of the ESS.

According to one embodiment, the method further comprises:
determining a first group of energy storage modules including one or more energy storage modules of the first string subject to said predetermined event;
selecting at least a second group of energy storage modules in at least a second string, wherein said selection is based on reducing an open circuit DC voltage mismatch between strings upon bypassing the first and the at least second group of energy storage modules, and
bypassing the first group of energy storage modules and the at least second group of energy storage modules.

By reducing the open circuit DC voltage mismatch between two or more strings, circulating currents may be reduced in time and/or in magnitude. The method may involve selecting a respective group of every string of the ESS. The respective groups of energy storage modules selected to be bypassed in the other strings may be selected arbitrarily. The respective groups of energy storage modules selected in the other strings may be selected intentionally based on performance, need of maintenance, age, etc.

According to one embodiment, the method further comprises:
coordinating operating timings of the module level protection circuits of two or more energy storage modules in the same string or in different strings. This may be applied for the purpose of disconnecting two or more energy storage modules. This may be applied for the purpose of bypassing two or more energy storage modules. The energy storage modules may be located in the same string or in different strings. This may be applied for the purpose of disconnecting a respective energy storage module located in each string of the first plurality of strings.

When applying this for the purpose of disconnecting two or more energy storage modules in the same string, it may advantageously be applied to all energy storage modules in the string. The open circuit DC voltage may then be shared among the various energy storage modules via one or more respective diodes of the module level protection circuit.

When applying this for the purpose of bypassing two or more energy storage modules in different strings, it may further reduce a time duration for which an ESS experiences circulating currents between parallel strings.

According to one embodiment, the method further comprises:
adjusting a DC link voltage of the converter to match open circuit DC voltage of the strings connected between the first and second converter connection terminals. By this, a mismatch between DC link voltage and respective open circuit DC voltages of the strings is reduced.

According to one embodiment, at least one of the plurality of string segments comprises a first and second string segment connection terminal and an energy storage module, wherein the module level protection circuit comprises a disconnection switch connected between the first string segment connection terminal and a first terminal of the energy storage module, a bypass switch connected between the first and second energy storage segment connection terminals, and a first diode connected in parallel with the disconnection switch and a second diode connected in parallel with the bypass switch, wherein bypassing said at least one energy storage module involves the bypass switch being in a closed state and the disconnection switch being in an open state, and disconnecting said at least one energy storage module involves setting both the bypass switch and the disconnection switch in an open state.

One or more energy storage modules may be associated with a module level protection circuit. One or more energy storage modules in the same string segment may be associated with a common module level protection circuit or individual module level protection circuits. One or more energy storage modules of a respective string may be associated with a module level protection circuit. All energy storage modules in a string may each be associated with a module level protection circuit. All energy storage modules in each string of the first plurality of strings may each be associated with a module level protection circuit.

According to one embodiment, the method further comprises:
monitoring one or more strings to detect one or more faults affecting the ESS.

By this, the ESS may be monitored to detect one or more faults affecting the ESS. Said one or more faults may constitute examples of the predetermined event to which one or more energy storage modules may be subjected to. The method may involve monitoring the ESS using one or more sensors, such as current sensors, voltage sensors, temperature sensors. The method may involve monitoring the ESS in terms of converter operations, for instance power converted between AC/DC, DC/DC etc.

According to one embodiment, the disconnection switch and/or the bypass switch of one or more module level protection circuits and/or any protection switches of one or more energy storage modules are resettable switches. Resettable switches may for instance include magnetic contactors, mechanically operated switches, solid state switches, power electronic devices (e.g., IGBT, MOSFET, etc.), vacuum switch or hybrid solution based on any of the aforementioned switches. One or more of said switches may be non-resettable switches, such as fuses or pyro switches. Said switches may be selected as a combination of resettable switches and non-resettable switches.

According to one embodiment, the method further comprises:
resetting one or more energy storage modules of at least one string after the predetermined event, and/or
charging one or more energy storage modules of at least one string after the predetermined event.

By this, the method may charge one or more strings after being restored from disconnection or partial bypass. In order to reset and/or charge one or more energy storage modules of at least one string, the module level protection circuit may incorporate resettable switches. The method may involves said resetting and/or charging by operating a respective module level protection circuit. By this, the ESS may be restored to normal operations.

According to one embodiment, said charging one or more energy storage modules is done gradually by operating a module level protection circuit such that the disconnection switch and/or the bypass switch repeatedly closes and opens, and/or said charging one or more energy storage modules is performed to control energy balance between at least two energy storage modules. Moreover, this may be applied to one or more energy storage modules in one string. Moreover, this may be applied to a plurality of energy storage modules located in different strings. Moreover, this may be applied to one or more energy storage modules located in each string of the first plurality of strings.

According to one embodiment, the method further comprises:
disconnecting the first energy storage system string by means of a first disconnector located between a first end of the first energy storage system string and the first converter connection terminal and/or by means of a second disconnector located between a second end of the first energy storage system string and the second converter connection terminal, and
optionally, wherein the first and/or second disconnector are operated into an open position after disconnecting the first energy storage system string by means of operating the module level protection circuit associated with said at least one energy storage module of the energy storage segments of the first energy storage system string.

By disconnecting a string using any or both of the disconnectors, an entire string may be disconnected by operations of a single element. Moreover, opening one or more of the disconnectors after one or more module level protection circuits have been operated to disconnect a string may guarantee galvanic isolation between a disconnected string and the rest of the ESS circuit.

According to one embodiment, when at least one energy storage module in a first string is subject to a predetermined event, such as a fault or maintenance, and when at least one energy storage module in a second string is subject to a predetermined event, such as a fault or maintenance, the method may further comprise disconnecting the first string and bypassing the at least one energy storage module in the second string subject to the predetermined event and bypassing a respective group of energy storage modules in at least a third string.

By this, the ESS may be operated in accordance with the method to disconnect a string while also bypassing one or more energy storage modules in other strings. This advantageously allows for a flexible ESS which may manage different predetermined events occurring closely in time or simultaneously.

According to one embodiment, a first collection of energy storage modules from two or more strings is located in a first closed environment and a second collection of energy storage modules from two or more strings is located in a second closed environment. The ESS may be adapted to provide a plurality of such closed environment in which one or more energy storage modules are located. Each such environment may be adapted to be electrically isolated from other environments when disconnected.

According to one embodiment, at least one energy storage segment of the energy storage segments comprises a plurality of parallel connected energy storage modules. The method may control operation of the ESS irrespective of string segment order in terms of energy storage modules, whether they are series connected, parallel connected, or connected in a configuration being a mix of series and parallel connection.

According to one embodiment, the converter provides a converter DC voltage of up to 1500 V or more. The method is not limited to any particular converter DC voltage but allows for a scalable nature of operations. The method may be applied for controlling operations of an ESS wherein a converter DC voltage is in an interval of 10-100 V, 100-200 V, 200-300 V, 300-400 V, 400-500 V, 500-600 V, 700-800 V, 800-900 V, 900-1000 V, 1000-1100 V, 1100-1200 V, 1200-1300 V, 1300-1400 V, 1400-1500 V, 1500-1600 V, 1600-1700 V, 1700-1800 V, 1800-1900 V, 1900-2000 V, 2000 V or more, or an interval formed as a combination of said intervals.

According to a second aspect of the invention, a control device is provided. The control device comprises means for performing the method according to the first aspect or any embodiments thereof. The control device may comprise monitoring means for monitoring one or more aspects of the ESS. The control device may comprise a processing device for processing input from monitoring means and/or a user and/or other forms of input and provide instructions for how to control operation of the ESS. The control device may comprise a control signal generating means for generating a signal based on said instructions to control one or more components of the ESS, including one or more module level protection circuits and optionally the converter.

According to a third aspect of the invention, an energy storage system, ESS, is provided. The ESS comprises: a converter providing a DC converter voltage between a first and a second converter connection terminal; a plurality of strings, each string comprising a plurality of string segments connected in series, each string segment comprising at least one energy storage module, each string associated with a respective open circuit DC voltage depending on the energy stored in the energy storage modules in each respective string, the strings connected in parallel between the first and second converter connection terminals, and a control device according to the second aspect or any embodiments thereof.

A computer program comprising instructions which, when the program is executed by a computer, cause the computer to carry out the method according to the first aspect or any embodiments thereof.

A computer-readable storage medium comprising instructions which, when executed by a computer, cause the computer to carry out the method according to the first aspect or any embodiments thereof.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1 shows a schematic illustration of an energy storage system, ESS, according to one embodiment of the invention;
Fig. 2 shows a schematic illustration of an energy storage segment according to one embodiment of the invention;
Fig. 3 shows an illustration of a method according to one embodiment of the invention.
Fig. 4 shows a schematic illustration of an ESS according to one embodiment of the invention, when a method according to the invention has been used to control operation of the ESS to bypass one or more energy storage modules in a plurality of energy storage system strings;
Fig. 5 shows a schematic illustration of an ESS according to one embodiment of the invention, when a method according to the invention has been used to control operation of the ESS to disconnect the energy storage modules in a first energy storage system string;
Fig. 6 shows a schematic illustration of an ESS according to one embodiment of the invention when a method according to the invention has been used to control operation of the ESS to disconnect a plurality of energy storage modules in a first energy storage system string and to bypass a plurality of energy storage modules in the energy storage system strings;
Fig. 7 shows a schematic illustration of an ESS according to one embodiment of the invention, when a method according to the invention has been used to control operation of the ESS to disconnect all energy storage modules in a plurality of energy storage system strings;
Fig. 8 shows a schematic illustration of an ESS according to one embodiment of the invention;
Figs. 9-12 shows a schematic illustration of an energy storage segment according to one embodiment of the invention.

### Description of Embodiments

Hereinafter, the principle and spirit of the present disclosure will be described with reference to the illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

The present invention relates to a method of controlling operations of an ESS. The present invention also relates to a control device for carrying out said method. The present invention also relates to an ESS comprising said control device.

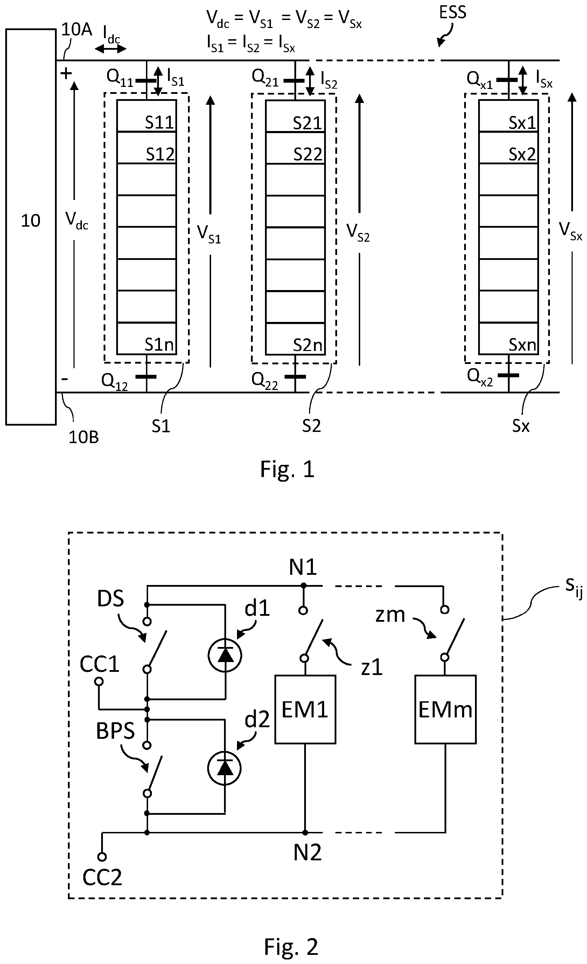

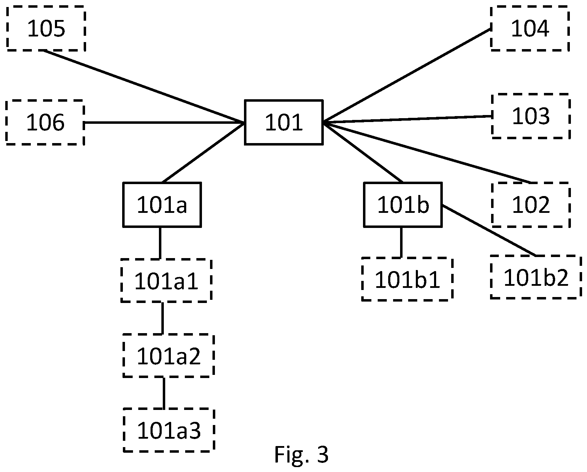

Fig.1 shows a schematic illustration of an energy storage system, ESS, according to one embodiment of the invention. The ESS is controllable in terms of operation by means of said method which is illustrated in Fig. 3. The ESS comprises a converter 10 providing a DC converter voltage V_{dc} between a first converter connection terminal 10A and a second converter connection terminal 10B. The ESS further comprises a plurality of energy storage modules for storing energy. The plurality of energy storage modules may be arranged in various configurations, such as strings of series connected string segments S11, S12, S1n; S21, S22, S2n; Sx1, Sx2, Sxn, as shown in Fig. 1, wherein each string segment comprises at least one energy storage module. In Fig. 1, the ESS is exemplified as comprising a first string S1, a second string S2, and one or more strings Sx, wherein x is the total number of strings. The ESS may comprise any number of strings, such as 2, 3, 4, or more. Moreover, in Fig. 1, each string S1, S2, Sx is exemplified as comprising eight string segments. A string is however not limited to comprise eight string segments, a string may comprise one or more string segments. Each string segment may comprise one energy storage module or a plurality of energy storage modules connected in series- and/or parallel.

Each string of the ESS is associated with a respective open circuit DC voltage V_{S1}, V_{S2}, V_{Sx} dependent on energy stored in each energy storage modules in a string. During use, a string current I_{S1}, I_{S2}, I_{Sx} may propagate in a respective string S1, S2, Sx when the converter 10 supplies a current I_{dc} and said respective string S1, S2, Sx is connected between the first and second converter connection terminals 10A, 10B. At the ends of each string, disconnectors Q11, Q12; Q21, Q22; Qx1, Qx2 may be provided for disconnecting the respective strings S1, S2, Sx individually. According to one embodiment, the strings share the same number and designs of energy storage segments S11, S12, S1n; S21, S22, S2n; Sx1, Sx2, Sxn, and the converter 10 applies substantially the same voltage Vdc over each string S1, S2, Sx. The string currents I_{S1}, I_{S2}, I_{Sx} may then be substantially equal during normal operations. When each string is charged the same, the open circuit DC voltage V_{S1}, V_{S2}, V_{Sx} may substantially be or become the same.

A string S1 in the ESS may be disconnected using either or both of the disconnectors Q11, Q12 associated with the string S1. However, the predetermined event may include certain faults, such as inter-module short circuiting, dc pole-to-pole short circuiting, double ground short circuit, for which disconnecting the string S1 using the module level protection circuit is preferable.

The ESS may include a battery management system, BMS. The BMS may comprise one or more energy storage modules. The BMS may comprise one or more strings of energy storage modules. The BMS may comprise a first plurality of strings of energy storage modules and at least a second plurality of strings of energy storage modules.

The ESS may include a power conversion system, PCS. The PCS may be adapted to handle AC-to-DC and DC-to-AC conversions. Energy from an AC power source may be used to charge one or more energy storage modules with DC power. Energy from the one or more energy storage modules may then be used at a later time. The PCS may include a converter for performing AC-to-DC- and/or DC-to-AC- and/or DC-to-DC conversions.

The ESS may be adapted with a first energy storage capacity. The first energy storage capacity may be dependent on the BMS design. An energy storage capacity may be defined as the total energy storage capacity of all energy storage modules of an ESS available for storing energy. The ESS may be adapted to provide a second energy storage capacity, which second energy storage capacity is less than the first energy storage capacity. The ESS may be adapted to reduce the energy storage capacity from the first energy storage capacity to the second energy storage capacity by reconfiguration of the BMS, for instance by disconnecting or bypassing one or more energy storage modules of the ESS.

The ESS may be further adapted so that a module level protection circuit is associated with one or more energy storage modules in each string segment. In Fig. 2, a module level protection circuit according to one embodiment of the invention is illustrated. The module level protection circuit is connected to one or more energy storage modules in a string segment Sij, wherein i and j respectively indicate string number and string segment number. The module level protection circuit comprises a disconnection switch DS connected between a first segment connection terminal CC1 and a first module node N1 to which a respective first connection terminal of the one or more energy storage modules is connected. The module level protection circuit comprises a bypass switch BPS connected between the first and the second segment connection terminals CC1, CC2. The module level protection circuit comprises a first diode d1 connected in parallel with the disconnection switch DS. The first diode d1 is configured to be forward-biased in a circuit direction from the first segment connection terminal CC1 to the first module node N1. The module level protection circuit comprises a second diode d2 connected in parallel with the bypass switch BPS. The second diode d2 is configured to be forward-biased in a circuit direction from the second segment connection terminal CC2 to the first segment connection terminal CC1. A respective second connection terminal of the one or more energy storage modules is connected to a second module node N2 which is connected to the second segment connection terminal CC2.

By operation of a module level protection circuit associated with one or more energy storage module EM1, EMm of a string segment Sij, said one or more energy storage modules EM1, EMm may be bypassed or disconnected. Bypassing said energy storage module EM1, EMm, may involve at least the bypass switch BPS being in a closed state and optionally the disconnection switch DS being in an open state. Disconnecting said energy storage module EM1, EMm may involve the bypass switch BPS being in an open state and the disconnection switch DS being in an open state. The module level protection circuit may further comprise a protection switch z1, zm connected between a first module node and an energy storage module EM1, EMm, to enable disconnecting said energy storage module EM1, EMm independently of other energy storage modules in the string segment Sij.

The module level protection circuit may be adapted such that the disconnection switch DS and/or the bypass switch BPS and/or any protection switches are resettable switches. Resettable switches may for instance include magnetic contactors, mechanically operated switches, solid state switches, power electronic devices (e.g., IGBT, MOSFET, etc.), vacuum switch or hybrid solution based on any of the aforementioned switches. Alternatively, the module level protection circuit may be adapted such that the disconnection switch DS and/or the bypass switch BPS and/or any protection switches are non-resettable switches. Such switches may for instance include fuses and pyro switches. Any two or more of said switches may be selected as a combination of resettable switches and non-resettable switches.

Optionally, each energy storage module in a string may be associated with a module level protection circuit. One or more energy storage modules in a string segment may be associated to a common module level protection circuit or individual module level protection circuits. Optionally, at least one energy storage module in each string is associated with a module level protection circuit. Optionally, all energy storage modules in each string are associated with a module level protection circuit. One or more module level protection circuits may be integrated in a string segment.

Moreover, a first collection of energy storage modules of from two or more strings S1, S2, Sx is located in a first closed environment and a second collection of energy storage modules from two or more strings is located in a second closed environment.

Fig. 3 illustrates a method of controlling operation of an ESS such as the one summarized above comprising said module level protection circuit. According to one embodiment, the method comprises: when at least one energy storage module EM in a first string S1 of the ESS is subject to a predetermined event, such as a fault or maintenance, operating 101 a module level protection circuit associated with at least one energy storage module EM of the first string S1 such that one of the following occurs:
i) bypassing 101a said at least one energy storage module,
ii) disconnecting 101b said at least one energy storage module.

Said at least one energy storage module EM may be bypassed or disconnected based on type of fault and/or type of maintenance. The method may involve prioritizing bypassing over disconnecting said at least one energy storage module if the predetermined event allows for this.

The method may further comprise one or more optional steps, which in Fig. 2 are indicated with dashed lines. The additional steps will be explained in the following.

According to one embodiment, the method comprises: determining 101a1 a first group of energy storage modules in a first string S1 subject to a predetermined event. Said first group may include one or more energy storage modules from a first string segment of the first string. Said first group may include energy storage modules from a first string segment and at least a second string segment in the first string. The method further comprises: selecting 101a2 at least a second group of energy storage modules in a second string S2, Sx. Said second group may include one or more energy storage modules from a first string segment of the second string. Said second group may include energy storage modules from a first string segment and at least a second string segment in the second string. The method may comprise selecting a third group in a third string, a fourth group in a fourth string etc. in a similar manner. Selecting the at least second group is based on reducing an open circuit DC voltage mismatch between strings upon bypassing the first and at least second group of energy storage modules. The method further comprises bypassing 101a3 the first group of energy storage modules and the at least second group of energy storage modules.

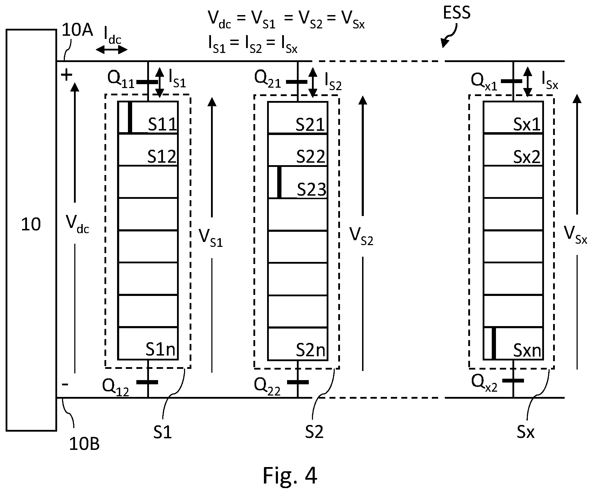

Bypassing energy storage modules in this manner is illustrated in Fig. 4 which shows an ESS with at least two strings S1, S2, Sx. Each string segment may comprise one or more energy storage modules. In the first string S1, the energy storage module or modules in the first string segment S11 is bypassed due to the predetermined event. This is indicated by the vertical line. Moreover, by bypassing a string segment, it may be meant that one or more energy storage modules in the string segment are bypassed. In the second string S2, the energy storage module or modules in the third string segment S23 is bypassed. In the x:th string Sx, energy storage module or modules in the n:th string segment Sxn is bypassed. As illustrated, one string segment in every string S2, Sx is bypassed when the string segment in the first string S1 is bypassed. By this, an open circuit DC string voltage mismatch is reduced. Preferably, the respective groups in the other strings are selected such that the open circuit DC string voltages are substantially equal. An undesired circulation current may therefore be reduced.

When using a module level protection circuit to disconnect at least one energy storage module in a string, it may also result in disconnecting said string. In the case wherein a string segment comprises only one energy storage module, the module level protection circuit is operated to disconnect only one energy storage module. In the case wherein a string segment comprises a plurality of parallel connected energy storage modules, the module level protection circuit is operated to disconnect each of said plurality of parallel connected energy storage modules. Alternatively, two or more energy storage modules in a string segment may be associated with a respective module level protection circuit, in which case each respective module level protection circuit is operated to disconnect the energy storage modules.

When disconnecting an energy storage module, the associated module level protection circuit is operated so that the disconnection switch DS is in an open state and the bypass switch BPS is in an open state. By this, a string current cannot flow through the disconnected energy storage module.

The method may further comprise operating module level protection circuits associated with two or more energy storage modules in a string S1 to disconnect a respective energy storage module. The method may further comprise operating module level protection circuits associated with all energy storage modules in a string S1 to disconnect the respective energy storage modules. By this, the converter voltage Vdc will be equally shared among all the respective second diodes D2 of the string.

With reference to Fig. 3, the method may further comprise coordinating 102 operating timings of the module level protection circuits of two or more energy storage modules within the same string or of different strings. By this, operation of the module level protection circuits associated with respective energy storage modules may be triggered at desired moments in time to limit undesired circulation currents in the ESS.

It is also advantageous to adjust the DC link voltage of the converter when bypassing one or more energy storage modules as it impacts the open circuit DC voltage. For this reason, the method may further comprise adjusting 103 a DC link voltage Vdc of the converter to match a resulting open circuit DC voltage of the strings S1, S2, Sx connected between the first and second converter connection terminals.

The method may further comprise monitoring 104 one or more strings S1, S2, Sx of the ESS to detect one or more faults affecting the ESS. Said monitoring may be in view of detecting irregular performance of the ESS in any of the strings from which it may be deduced that a fault has occurred. The ESS may be monitored by means of sensors adapted to measure one or more parameters of the ESS, such as current, voltage, temperature, etc. from which it may be deduced a fault has occurred or that maintenance is needed. The ESS may be monitored intermittently or continuously or on command operation of the ESS.

The method may further comprise resetting 105 one or more energy storage modules after the predetermined event. The method may further comprise charging 106 one or more energy storage modules after the predetermined event. Said charging one or more energy storage modules may be done gradually by operating a module level protection circuit such that the disconnection switch DS and/or the bypass switch BPS repeatedly closes and opens. The method may be adapted such that said charging one or more energy storage modules is performed to control energy balance between at least two energy storage modules.

The method may further comprise disconnecting 101b2 the first string S1 by means of a first disconnector Q11 located at a first string end and/or by means of a second disconnector Q12 located at a second string end. Optionally, the first and/or second disconnector Q11, Q12 are operated into an open position after disconnecting the first string S1 by means of operating at least one module level protection circuit associated with said at least one energy storage module in the first string S1.

Following a disconnection of a string using the module level protection circuits associated with one or more energy storage modules in a string, the disconnectors Q11, Q12 may also be opened. By this, galvanic isolation is provided between the disconnected string and the rest of the ESS, which can continue operating but with a reduced energy storage capacity.

The method may involve handling multiple predetermined events occurring at least partly simultaneously or in close succession. When at least one energy storage module EM in a first string is subject to a predetermined event, such as a fault or maintenance, and when at least one energy storage module EM in a second string S2 is subject to a predetermined event, such as a fault or maintenance, disconnecting the first string S1 and bypassing a first group of energy storage modules in the second string S2 and a second group of energy modules in a third string Sx.

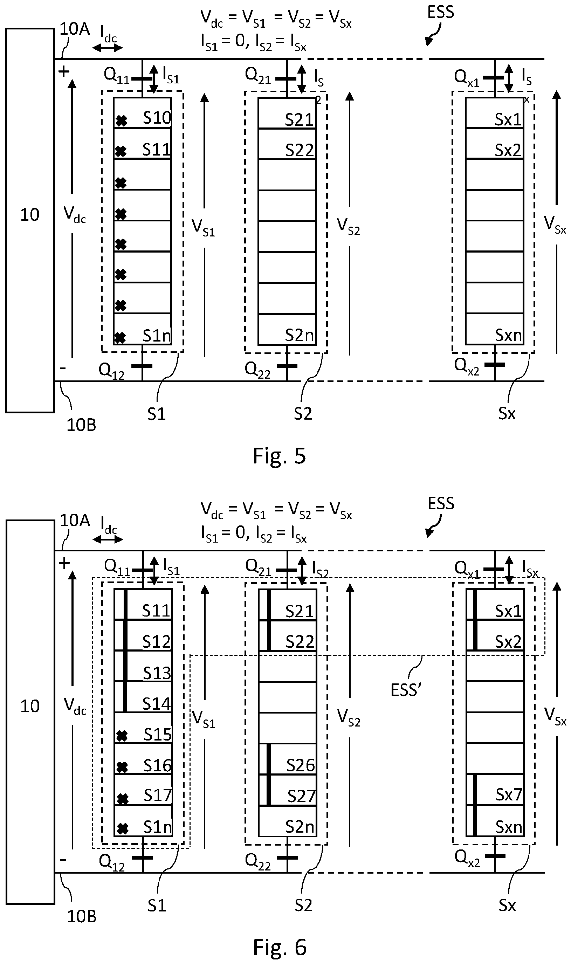

Fig. 5 shows an ESS wherein a plurality of string segments S10, S11, S1n have been disconnected, wherein disconnection is indicated by a cross. As a consequence of at least one of the string segments being disconnected, the string current Is1 is substantially zero. Moreover, the disconnectors Q11, Q12 may be opened also in accordance with one embodiment of the method. Meanwhile, the other strings S2, Sx remain connected between the first and second converter connection terminals 10A, 10B. By this, the ESS may continue operations even though the first string S1 has been disconnected.

Fig. 6 shows an ESS wherein a plurality of string segments S15, S16, S17, S1n in the first string S1 have been disconnected (thereby disconnecting the whole first string S1), and wherein a first group of string segments S11, S12, S13, S14 in the first string S1 had already been bypassed and also a second group of string segments S21, S22, S26, S27 in the second string S2 had at the same occasion been bypassed and also a third group of string segments Sx1, Sx2, Sx7, Sxn in an x:th string Sx had been bypassed. The method may operate as such, even when a plurality of string segments is located in a closed environment ESS' as shown in Fig.6.

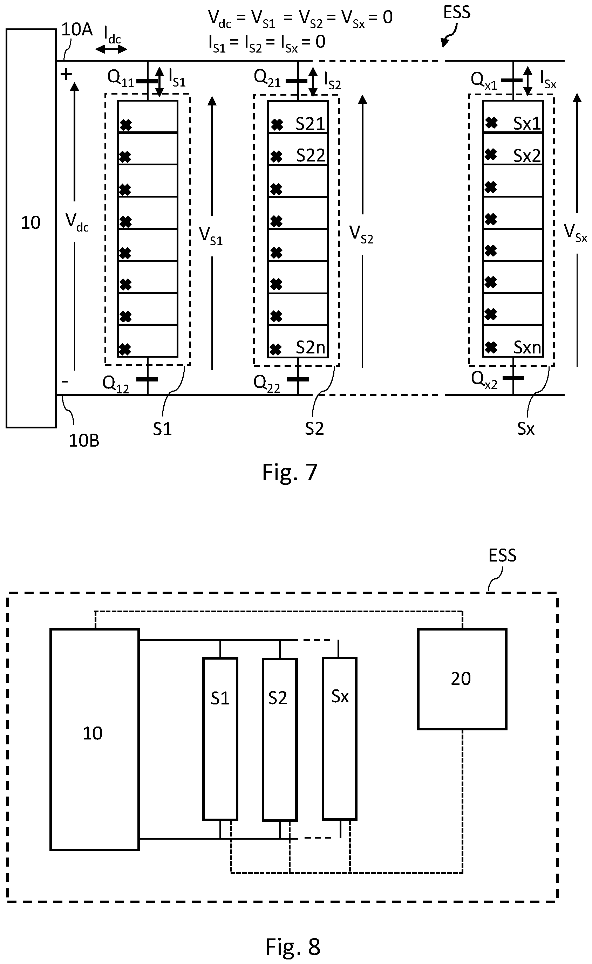

Fig. 7 shows an ESS wherein all string segments in all strings have been disconnected. This may be preferable during certain types of predetermined events, such as all-encompassing maintenance or certain kinds of faults.

Fig. 8 illustrates an ESS according to one embodiment of the invention. The ESS comprises a converter 10, a plurality of strings S1, S2, Sx, and a control device 20. The control device 20 comprises means for performing the method according to any of the preceding claims. The control device 20 may comprise means such as processing means to process input from a user and/or sensors monitoring the ESS.

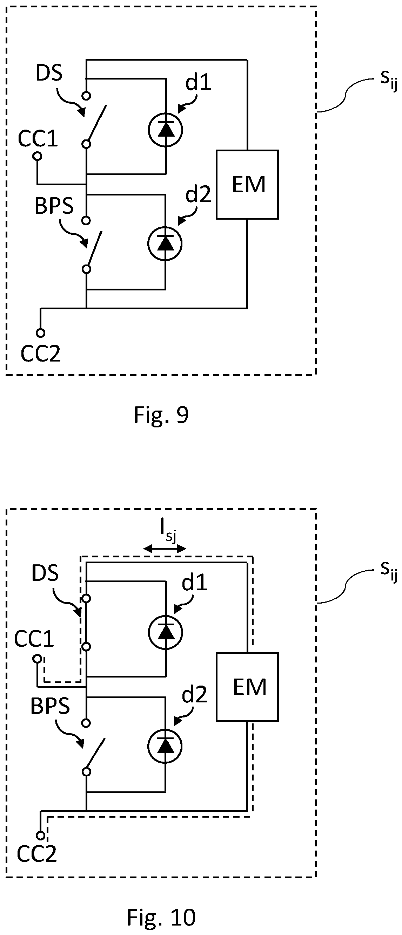

Fig. 9 illustrates a module level protection circuit according to one embodiment of the invention. The module level protection circuit is connected to an energy storage module EM in a string segment Sij, wherein i and j respectively indicate string number and string segment number. While only one energy storage module is shown, the string segment may comprise a plurality of energy storage modules, which may be series and/or parallel connected. The module level protection circuit comprises a disconnection switch DS connected between a first segment connection terminal CC1 and a first connection terminal of the energy storage modules. The module level protection circuit comprises a bypass switch BPS connected between the first and the second segment connection terminals CC1, CC2. The module level protection circuit comprises a first diode d1 connected in parallel with the disconnection switch DS. The first diode d1 is configured to be forward-biased in a circuit direction from the first segment connection terminal CC1 to the connection terminal of the energy storage module. The module level protection circuit comprises a second diode d2 connected in parallel with the bypass switch BPS. The second diode d2 is configured to be forward-biased in a circuit direction from the second segment connection terminal CC2 to the first segment connection terminal CC1.

Fig. 10 shows a string segment Sij comprising an energy storage module EM and a module level protection circuit, and further shows the string segment during normal operation. During normal operation, the disconnection switch DS is in a closed state and the bypass switch BPS is in an open state. Hence, the string current Isj generally propagates between the first and second string segment connection terminals CC1, CC2 via the closed disconnection switch DS and the energy storage module EM, wherein the direction depends on the voltage difference between the connection terminals CC1 and CC2.

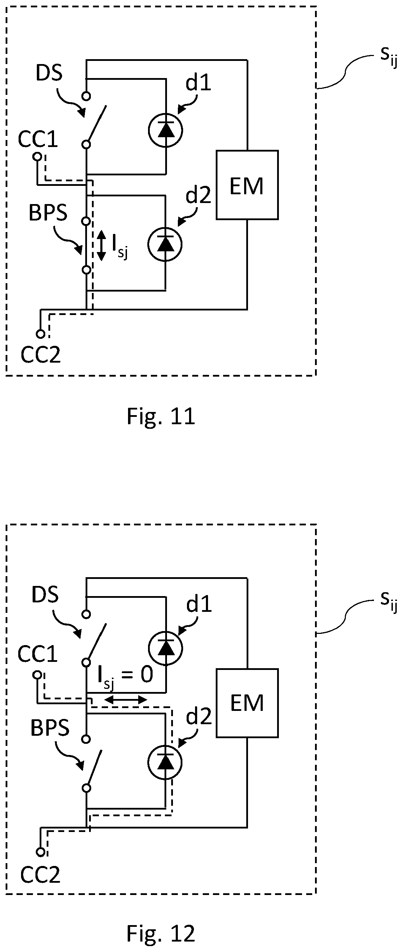

Fig. 11 shows a string segment comprising an energy storage module and a module level protection circuit, and further shows the string segment when the energy storage module EM has been bypassed. When bypassed, the bypass switch is in a closed state. As shown in Fig. 10, the disconnection switch DS may be in an open state. Hence, the string current Isj generally propagates between the first and second string segment connection terminals CC1, CC2 via the bypass switch BPS.

Fig. 12 shows a string segment comprising an energy storage module EM and a module level protection circuit, and further shows the string segment when the energy storage module EM has been disconnected. When disconnected, the bypass switch BPS is in an open state and the disconnection switch DS is in an open state. Because of the first and the second diode d1, d2, the string current Sij is hindered from propagating freely through the string segment Sij.

While the foregoing is directed to embodiments of the disclosure, other and further embodiments may be devised without parting from the inventive concept discussed herein. The scope of the invention is however determined by the claims.

## Claims

1. Method of controlling operation of an energy storage system, ESS, wherein said ESS comprises:
a converter (10) providing a DC converter voltage (V_{dc}) between a first converter connection terminal (10A) and a second converter connection terminal (10B);
a plurality of strings (S1, S2, Sx), each string (S1, S2, Sx) comprising a plurality of string segments (S11, S12, S1n; S21, S22, S2n; Sx1, Sx2, Sxn) connected in series, each string segment comprising at least one energy storage module (EM), each string (S1, S2, Sx) associated with a respective open circuit DC voltage (V_{S1}, V_{S2}, V_{Sx}) dependent on energy stored in the energy storage modules in each respective string (S1, S2, Sx), the strings (S1, S2, Sx) connected in parallel between the first and second converter connection terminals (10A, 10B),
the method comprising:
when at least one energy storage module (EM) in a first string (S1) is subject to a predetermined event, such as a fault or maintenance, operating (101) a module level protection circuit associated with said at least one energy storage module (EM) such that one of the following occurs:
i) bypassing (101a) said at least one energy storage module (EM),
ii) disconnecting (101b) said at least one energy storage module (EM).

2. Method according to claim 1, further comprising:
operating (101b1) respective module level protection circuits associated with one or more energy storage modules (EM) of at least two strings connected between the first and second converter connection terminals (10A, 10B) to disconnect said at least two strings of the ESS from one another and the first and second converter connection terminals (10A, 10B).

3. Method according to any of claims 1-2, further comprising:
determining (101a1) a first group of energy storage modules including one or more energy storage modules of the first string (S1) subject to said predetermined event;
selecting (101a2) at least a second group of energy storage modules in at least a second string (S2, Sx), wherein said selection is based on reducing an open circuit DC voltage mismatch between strings upon bypassing the first and the at least second group of energy storage modules, and
bypassing (101a3) the first group of energy storage modules (S11, S12, S1n) and the at least second group of energy storage modules (S21, S22, S2n; Sx1, Sx2, Sxn).

4. Method according to any preceding claims, further comprising:
coordinating (102) operating timings of the module level protection circuits of two or more energy storage modules in the same string (S1, S2, Sx) or in different strings (S1, S2, Sx).

5. Method according to any preceding claims, further comprising
adjusting (103) a DC link voltage (V_{dc}) of the converter (10) to match open circuit DC voltage of the strings (S1, S2, Sx) connected between the first and second converter connection terminals (10A, 10B).

6. Method according to any preceding claims, wherein at least one of the plurality of string segments comprises a first string segment connection terminal and a second string segment connection terminal (CC1, CC2) and an energy storage module (EM), wherein the module level protection circuit comprises a disconnection switch (DS) connected between the first string segment connection terminal (CC1) and a first terminal of the energy storage module (EM), a bypass switch (BPS) connected between the first and second energy storage segment connection terminals (CC1, CC2), and a first diode (d1) connected in parallel with the disconnection switch (DS) and a second diode (d2) connected in parallel with the bypass switch (BPS), wherein bypassing said at least one energy storage module involves the bypass switch (BPS) being in a closed state and the disconnection switch (DS) being in an open state, and disconnecting said at least one energy storage module involves setting both the bypass switch (BPS) and the disconnection switch (DS) in an open state.

7. Method according to any preceding claims, further comprising
monitoring (104) one or more strings (S1, S2, Sx) to detect one or more faults affecting the ESS.

8. Method according to any preceding claims, wherein the disconnection switch (DS) and/or the bypass switch (BPS) of one or more module level protection circuits and/or any protection switches (z1, zm) of one or more energy storage modules are resettable switches.

9. Method according to claim 8, further comprising
resetting (105) one or more energy storage modules of at least one string (S1, S2, Sx) after the predetermined event, and/or
charging (106) one or more energy storage modules of at least one string (S1, S2, Sx) after the predetermined event.

10. Method according to claim 9, wherein said charging one or more energy storage modules is done gradually by operating a module level protection circuit such that the disconnection switch (DS) and/or the bypass switch (BPS) repeatedly closes and opens, and/or said charging one or more energy storage modules is performed to control energy balance between at least two energy storage modules.

11. Method according to any preceding claims, further comprising disconnecting (101b2) the first string (S1) by means of a first disconnector (Q11) located between a first end of the first string (S1) and the first converter connection terminal (10A) and/or by means of a second disconnector (Q12) located between a second end of the first string (S1) and the second converter connection terminal (10B), and
optionally, wherein the first and/or second disconnector (Q11, Q12) are operated into an open position after disconnecting the first string (S1) by means of operating the module level protection circuit associated with said at least one energy storage module of the first string (S1).

12. Method according to any preceding claims, when at least one energy storage module (EM) in a first string (S1) is subject to a predetermined event, such as a fault or maintenance, and when at least one energy storage module (EM) in a second string (S2) is subject to a predetermined event, such as a fault or maintenance, disconnecting the first string (s1) and bypassing the at least one energy storage module in the second string (S2) subject to the predetermined event and bypassing a respective group of energy storage modules in at least a third string (Sx).

13. Method according to any preceding claims, wherein a first collection of energy storage modules from two or more strings (S1, S2, Sx) is located in a first closed environment and a second collection of energy storage modules from two or more strings is located in a second closed environment.

14. A control device (20) comprising means for performing the method according to any of the preceding claims.

15. Energy storage system, ESS, comprising:
a converter (10) providing a DC converter voltage between a first converter connection terminal and a second converter connection terminal (10A, 10B);
a plurality of strings (S1, S2, Sx), each string (S1, S2, Sx) comprising a plurality of string segments (S11, S12, S1n; S21, S22, S2n; Sx1, Sx2, Sxn) connected in series, each string segment comprising at least one energy storage module (EM), each string (S1, S2, Sx) associated with a respective open circuit DC voltage (V_{S1}, V_{S2}, V_{Sx}) depending on the energy stored in the energy storage modules in each respective string (S1, S2, Sx), the strings (S1, S2, Sx) connected in parallel between the first and second converter connection terminals (10A, 10B), and
a control device (20) according to claim 14.
